# DEMANDE DE BREVET EUROPEEN

(11) **EP 4 485 367 A1**
(43) Date de publication de la demande: **01.01.2025**
(21) Numéro de dépôt: 24180426.9
(22) Date de dépôt: 06.06.2024
(51) Int. Cl.: G06V 10/26, G06V 10/50, G06V 20/17, G06V 20/56

(54) **PROCÉDÉ ET SYSTEME DE DÉTECTION D'AU MOINS UN ÉLÉMENT DE MARQUAGE AU SOL D'AU MOINS UNE PISTE D'ATTERRISSAGE PAR VISION PAR ORDINATEUR ET PAR L'INTERMÉDIAIRE DE TECHNIQUES DE TRAITEMENT DU SIGNAL**

(30) Priorité: 27.06.2023 FR 2306719
(71) Demandeur: AIRBUS OPERATIONS (SAS), 31060 Toulouse (FR)
(72) Inventeur: FAURE, Louise, 31060 TOULOUSE (FR); SAMMOUR SAWAYA, Thierry, 31060 TOULOUSE (FR)
(74) Mandataire: Gevers & Orès

(57) **Abrégé**

- Procédé et système de détection d'au moins un élément de marquage au sol d'au moins une piste d'atterrissage par vision par ordinateur et par l'intermédiaire de techniques de traitement du signal.
- Le système de détection (S) comprend au moins une unité de collecte d'images (10), une unité de découpage (11) pour découper l'image (I) en bandes (ST1), une unité de détermination (12) pour déterminer au moins une courbe d'intensité moyenne (C) pour au moins une bande (ST1), une unité de reconnaissance (13) pour reconnaître dans la courbe d'intensité moyenne (C) au moins un élément de marquage au sol (100) de la piste d'atterrissage (T), une unité de détection (2) pour détecter une position d'au moins un élément de marquage au sol d'au moins une piste d'atterrissage (T) dans l'images (I). Grâce à la détermination des courbes d'intensité moyenne, la détection des éléments de marquage au sol demande peu de ressource de calcul.

## Description

### Domaine technique

La présente invention concerne un procédé et un système de détection d'une piste d'atterrissage par vision par ordinateur et par l'intermédiaire de techniques de traitement du signal.

### État de la technique

La fonction d'atterrissage automatique d'un aéronef sur une piste d'atterrissage impose de sévères contraintes quant à la mise en oeuvre des systèmes de navigation de l'aéronef. Cette fonction peut nécessiter l'apport de nouvelles technologies permettant d'élargir les possibilités d'atterrissage automatique pour tous les aéroports n'importe quand.

Les technologies de vision peuvent apporter des avantages intéressants car ces technologies ne dépendent pas d'infrastructures au sol, telles qu'un système d'atterrissage aux instruments.

Pour qu'un aéronef atterrisse, sa trajectoire doit être cohérente avec sa position courante par rapport à la piste d'atterrissage, aussi bien avec sa position latérale que sa position verticale.

Le seuil de la piste d'atterrissage peut être un des principaux repères qui peut être utilisé afin d'obtenir des informations de position verticale de l'aéronef par rapport à la piste d'atterrissage. En effet, le seuil est repéré sur la piste d'atterrissage à l'aide de marquages au sol composés de plusieurs bandes blanches et noires présentant des largeurs et des espacements entre elles fixées. De plus, ces bandes sont généralement disposées 6 mètres avant le seuil. Cet ensemble de bandes formant un élément de marquage au sol est souvent appelé « piano ». On entend par « élément de marquage au sol » un motif tracé sur le sol de la piste d'atterrissage T et/ou un motif lumineux d'un dispositif lumineux d'approche (« approach lighting system » en anglais) de la piste d'atterrissage T.

La technologie de la vision par ordinateur pourrait être utilisée pour détecter les éléments de marquage au sol, telle que le piano afin de déterminer la position de l'aéronef.

Toutefois, cette technologie peut être difficile à mettre en oeuvre en temps réel à cause des grandes dimensions des données à traiter. Par exemple, une image en couleur à haute définition codée sur huit bits représente environ 2,8 Mo à traiter. D'importantes ressources de calcul sont donc nécessaires.

### Exposé de l'invention

La présente invention a pour objet de proposer un procédé et un système de détection d'une piste d'atterrissage par vision par ordinateur nécessitant peu de ressources de calcul.

Pour cela, elle concerne un procédé de détection d'au moins un élément de marquage au sol d'au moins une piste d'atterrissage.

Selon l'invention, le procédé de détection comprend au moins les étapes suivantes :
- une étape de collecte d'images, mise en oeuvre par une unité de collecte d'images, pour collecter au moins une image captée par au moins une unité de capture d'images, la ou les images étant sous forme d'une matrice de pixels présentant une première dimension et une deuxième dimension,
- un premier ensemble d'étapes comprenant :
   ∘ une première étape de découpage, mise en oeuvre par une première unité de découpage, pour découper la matrice de pixels en premières bandes parallèles associées chacune à une position respective de chaque première bande dans la matrice de pixels de la ou des images, chaque première bande correspondant à une première sous-matrice présentant au moins une ligne de pixels et un nombre de colonnes de pixels égal à la première dimension de la matrice de pixels,
   ∘ une première étape de détermination, mise en oeuvre par une première unité de détermination, pour déterminer une courbe d'intensité moyenne pour au moins une première bande sélectionnée parmi les premières bandes provenant du découpage de la matrice de pixels, la courbe d'intensité moyenne étant déterminée en calculant pour chaque colonne de pixels de la première sous-matrice de la ou des premières bandes sélectionnées une moyenne d'intensité du ou des pixels de chaque colonne de pixels,
   ∘ une première étape de reconnaissance, mise en oeuvre par une première unité de reconnaissance, pour reconnaître dans la courbe d'intensité moyenne de la ou des premières bandes sélectionnées une forme de courbe caractéristique d'au moins un élément de marquage au sol d'au moins une piste d'atterrissage,
le procédé de détection comprenant en outre :
- une étape de détection, mise en oeuvre par une unité de détection, pour détecter une position du ou des éléments de marquage au sol d'au moins une piste d'atterrissage dans la ou les images à partir du ou des éléments de marquage au sol reconnus et de la position de la ou des premières bandes sélectionnées dans la matrice de pixels de la ou des images.

Ainsi, grâce à la détermination de courbes d'intensité moyenne déterminées à partir de bande d'images, il est possible de détecter des éléments de marquage au sol sur une image à deux dimensions à partir de courbes à une dimension. Les besoins en ressource de calcul se trouvent ainsi fortement diminués par rapport à une détection selon les technologies usuelles en reconnaissance de forme sur une image à deux dimensions.

Selon un mode de réalisation préféré, le procédé de détection comprend un deuxième ensemble d'étapes précédant l'étape de détection, le deuxième ensemble d'étapes comprenant :
- une deuxième étape de découpage, mise en oeuvre par une deuxième unité de découpage, pour découper la matrice de pixels en deuxièmes bandes parallèles associées chacune à une position respective de chaque deuxième bande dans la matrice de pixels de la ou des images, chaque deuxième bande correspondant à une deuxième sous-matrice présentant au moins une ligne de pixels et un nombre de colonnes de pixels égal à la deuxième dimension de la matrice de pixels,
- une deuxième étape de détermination, mise en oeuvre par une deuxième unité de détermination, pour déterminer une courbe d'intensité moyenne pour au moins une deuxième bande sélectionnée parmi les deuxièmes bandes provenant du découpage de la matrice de pixels, la courbe d'intensité moyenne étant déterminée en calculant pour chaque colonne de pixels de la deuxième sous-matrice de la ou des deuxièmes bandes sélectionnées une moyenne d'intensité du ou des pixels de chaque colonne de pixels,
- une deuxième étape de reconnaissance, mise en oeuvre par une deuxième unité de reconnaissance, pour reconnaître dans la courbe d'intensité moyenne de la ou des deuxièmes bandes sélectionnées une forme de courbe caractéristique d'au moins un élément de marquage au sol d'au moins une piste d'atterrissage,
l'étape de détection étant mise en oeuvre pour détecter une position du ou des éléments de marquage au sol d'au moins une piste d'atterrissage dans la ou les images à partir du ou des éléments de marquage au sol reconnus, de la position de la ou des premières bandes sélectionnées dans la matrice de pixels de la ou des images et de la position de la ou des deuxièmes bandes sélectionnées dans la matrice de pixels de la ou des images.

Selon une première variante, la première étape de reconnaissance et/ou la deuxième étape de reconnaissance sont mises en oeuvre pour reconnaître une forme de courbe caractéristique d'au moins un élément de marquage au sol de la ou des pistes d'atterrissage dans la courbe d'intensité moyenne de la ou des premières bandes sélectionnées et/ou de la ou des deuxièmes bandes sélectionnées à l'aide d'un réseau neuronal.

Selon une deuxième variante, la première étape de reconnaissance comprend les sous-étapes suivantes :
- une première sous-étape d'analyse fréquentielle, mise en oeuvre par une première sous-unité d'analyse fréquentielle, pour détecter au moins une harmonique dans la courbe d'intensité moyenne de la ou des premières bandes sélectionnées,
- une première sous-étape de partitionnement de données, mise en oeuvre par une première sous-unité de partitionnement de données, pour former au moins un groupe comportant une ou des harmoniques caractéristiques d'un élément de marquage au sol de la piste d'atterrissage, la ou les harmoniques caractéristiques d'un élément de marquage au sol étant stockées dans une base de données,
- une première sous-étape de reconnaissance, mise en oeuvre par une première sous-unité de reconnaissance, pour reconnaître au moins un élément de marquage au sol de la ou des pistes d'atterrissage pour le groupe formé ou les groupes formés dans la première sous-étape de partitionnement de données.

Selon le mode de réalisation préférée pour la deuxième variante, la deuxième étape de reconnaissance comprend les sous-étapes suivantes :
- une deuxième sous-étape d'analyse fréquentielle, mise en oeuvre par une deuxième sous-unité d'analyse fréquentielle, pour détecter au moins une harmonique dans la courbe d'intensité moyenne de la ou des deuxièmes bandes sélectionnées,
- une deuxième sous-étape de partitionnement de données, mise en oeuvre par une deuxième sous-unité de partitionnement de données, pour former au moins un groupe comportant une ou des harmoniques caractéristiques d'un élément de marquage au sol de la piste d'atterrissage, la ou les harmoniques caractéristiques d'un élément de marquage au sol étant stockées dans une base de données,
- une deuxième sous-étape de reconnaissance, mise en oeuvre par une deuxième sous-unité de reconnaissance, pour reconnaître au moins un élément de marquage au sol de la ou des pistes d'atterrissage pour le groupe formé ou les groupes formés dans la deuxième sous-étape de partitionnement de données.

Selon une troisième variante, la première étape de reconnaissance comprend les sous-étapes suivantes :
- une première sous-étape de corrélation, mise en oeuvre par une première sous-unité de corrélation, pour déterminer au moins un paramètre de corrélation entre la courbe d'intensité moyenne de la ou des premières bandes sélectionnées avec au moins une courbe synthétique caractéristique d'un élément de marquage au sol, la ou les courbes synthétiques étant stockées dans une base de données,
- une première sous-étape de reconnaissance, mise en oeuvre par une première sous-unité de reconnaissance, pour reconnaître au moins un élément de marquage au sol de la ou des pistes d'atterrissage si le paramètre de corrélation déterminé dans la première sous-étape de corrélation est supérieure ou égale à une valeur prédéterminée.

Selon le mode préféré pour la troisième variante, la deuxième étape de reconnaissance comprend les sous-étapes suivantes :
- une deuxième sous-étape de corrélation, mise en oeuvre par une deuxième sous-unité de corrélation, pour déterminer au moins un paramètre de corrélation entre la courbe d'intensité moyenne de la ou des deuxièmes bandes sélectionnées avec au moins une courbe synthétique caractéristique d'un élément de marquage au sol, la ou les courbes synthétiques étant stockées dans une base de données,
- une deuxième sous-étape de reconnaissance, mise en oeuvre par une deuxième sous-unité de reconnaissance, pour reconnaître au moins un élément de marquage au sol de la ou des pistes d'atterrissage si le paramètre de corrélation déterminé dans la deuxième sous-étape de corrélation est supérieure ou égale à une valeur prédéterminée.

Par ailleurs, le premier ensemble d'étapes comprend :
- une première étape de comparaison, mise en oeuvre par une première unité de comparaison, pour comparer les courbes d'intensité moyenne pour lesquelles un même élément de marquage au sol a été reconnu afin de déterminer ou non un décalage entre lesdites courbes d'intensité moyenne,
- une première étape de redressement, mise en oeuvre par une première unité de redressement si un décalage a été déterminé, pour redresser la matrice de pixels de la ou des images en fonction du décalage déterminé,
le premier ensemble d'étapes étant répété avec la matrice de pixels de la ou des images redressées à la première étape de redressement.

Selon le mode de réalisation préféré, le deuxième ensemble d'étapes comprend :
- une deuxième étape de comparaison, mise en oeuvre par une deuxième unité de comparaison, pour comparer les courbes d'intensité moyenne pour lesquelles un même élément de marquage au sol a été reconnu afin de déterminer ou non un décalage entre lesdites courbes d'intensité moyenne,
- une deuxième étape de redressement, mise en oeuvre par une deuxième unité de redressement si un décalage a été déterminé, pour redresser la matrice de pixels de la ou des images en fonction du décalage déterminé,
le deuxième ensemble d'étapes étant répété avec la matrice de pixels de la ou des images redressées à la deuxième étape de redressement.

Par ailleurs, le procédé de détection comprend une troisième étape de détermination, mise en oeuvre par une troisième unité de détermination, pour déterminer une position d'au moins un seuil de la ou des pistes d'atterrissage à partir de la position du ou des éléments de marquage au sol détectés dans la ou les images et de caractéristiques de la ou des pistes d'atterrissage provenant d'une base de données de piste.

En outre, le procédé de détection comprend une quatrième étape de détermination, mise en oeuvre par une quatrième unité de détermination, pour déterminer une position de l'aéronef à partir de la position du ou des seuils de la ou des pistes d'atterrissage dans l'image, d'une position et angles de la ou des unités de collecte d'image et des caractéristiques de la ou des pistes d'atterrissage provenant de la base de données de piste.

De plus, le procédé de détection comprend une étape de transmission, mise en oeuvre par une unité de transmission, pour transmettre à un dispositif utilisateur un signal représentatif de la position d'au moins un seuil de la ou des pistes d'atterrissage ou de la position de l'aéronef, ou de la position du ou des éléments de marquage au sol d'au moins une piste d'atterrissage dans la ou les images.

L'invention concerne aussi un système de détection d'au moins un élément de marquage au sol d'au moins une piste d'atterrissage.

Selon l'invention le système de détection comprend au moins :
- une unité de collecte d'images configurée pour collecter au moins une image captée par au moins une unité de capture d'images, la ou les images étant sous forme d'une matrice de pixels présentant une première dimension et une deuxième dimension,
- un premier ensemble d'unités comprenant :
   ∘ une première unité de découpage configurée pour découper la matrice de pixels en premières bandes parallèles associées chacune à une position respective de chaque première bande dans la matrice de pixels de la ou des images, chaque premières bande correspondant à une première sous-matrice présentant au moins une ligne de pixels et un nombre de colonnes de pixels égal à la première dimension de la matrice de pixels,
   ∘ une première unité de détermination configurée pour déterminer une courbe d'intensité moyenne pour au moins une première bande sélectionnée parmi les premières bandes provenant du découpage de la matrice de pixels, la courbe d'intensité moyenne étant déterminée en calculant pour chaque colonne de pixels de la première sous-matrice de la ou des premières bandes sélectionnées une moyenne d'intensité du ou des pixels de chaque colonne de pixels,
   ∘ une première unité de reconnaissance configurée pour reconnaître dans la courbe d'intensité moyenne de la ou des premières bandes sélectionnées une forme de courbe caractéristique d'au moins un élément de marquage au sol d'au moins une piste d'atterrissage,
le système de détection comprenant en outre :
- une unité de détection configurée pour détecter une position du ou des éléments de marquage au sol d'au moins une piste d'atterrissage dans la ou les images à partir du ou des éléments de marquage au sol reconnus et de la position de la ou des premières bandes sélectionnées dans la matrice de pixels de la ou des images.

Selon le mode de réalisation préféré, le système de détection comprend un deuxième ensemble d'unités comprenant :
- une deuxième unité de découpage configurée pour découper la matrice de pixels en deuxièmes bandes parallèles associées chacune à une position respective de chaque deuxième bande dans la matrice de pixels de la ou des images, chaque deuxième bande correspondant à une deuxième sous-matrice présentant au moins une ligne de pixels et un nombre de colonnes de pixels égal à la deuxième dimension de la matrice de pixels,
- une deuxième unité de détermination configurée pour déterminer une courbe d'intensité moyenne pour au moins une deuxième bande sélectionnée parmi les deuxièmes bandes provenant du découpage de la matrice de pixels, la courbe d'intensité moyenne étant déterminée en calculant pour chaque colonne de pixels de la deuxième sous-matrice de la ou des deuxièmes bandes sélectionnées une moyenne d'intensité du ou des pixels de chaque colonne de pixels,
- une deuxième unité de reconnaissance configurée pour reconnaître dans la courbe d'intensité moyenne de la ou des deuxièmes bandes sélectionnées une forme de courbe caractéristique d'au moins un élément de marquage au sol de la piste d'atterrissage,
l'unité de détection étant configurée pour détecter une position du ou des éléments de marquage au sol d'au moins une piste d'atterrissage dans la ou les images à partir du ou des éléments de marquage au sol reconnus, de la position de la ou des premières bandes sélectionnées dans la matrice de pixels de la ou des images et de la position de la ou des deuxièmes bandes sélectionnées dans la matrice de pixels de la ou des images.

L'invention concerne également un aéronef,
comportant un système de détection, tel que celui spécifié ci-dessus.

### Brève description des figures

Les figures annexées feront bien comprendre comment l'invention peut être réalisée. Sur ces figures, des références identiques désignent des éléments semblables.
La figure 1 représente schématiquement le système de détection selon un mode de réalisation.
La figure 2 représente schématiquement la première et la deuxième unité de reconnaissance selon la deuxième configuration.
La figure 3 représente schématiquement la première et la deuxième unité de reconnaissance selon la troisième configuration.
La figure 4 représente schématiquement le procédé de détection selon un mode de réalisation.
La figure 5 représente schématiquement la première et la deuxième étape de reconnaissance selon la deuxième configuration.
La figure 6 représente schématiquement la première et la deuxième étape de reconnaissance selon la troisième configuration.
La figure 7 représente une image captée par une unité de capture d'images et collectée par l'unité de collecte d'images.
La figure 8 représente l'image découpée en bandes selon une première dimension de l'image.
La figure 9 représente l'image découpée en bandes selon une deuxième dimension de l'image.
La figure 10 représente schématiquement les étapes de découpage de la matrice de pixels de l'image.
La figure 11 représente schématiquement la détermination des courbes d'intensité moyenne à partir des moyennes d'intensité des pixels.
La figure 12 représente une courbe synthétique caractéristique d'un élément de marquage au sol, en particulier d'un piano.
La figure 13 représente un aéronef de profil susceptible d'atterrir sur une piste d'atterrissage.

### Description détaillée

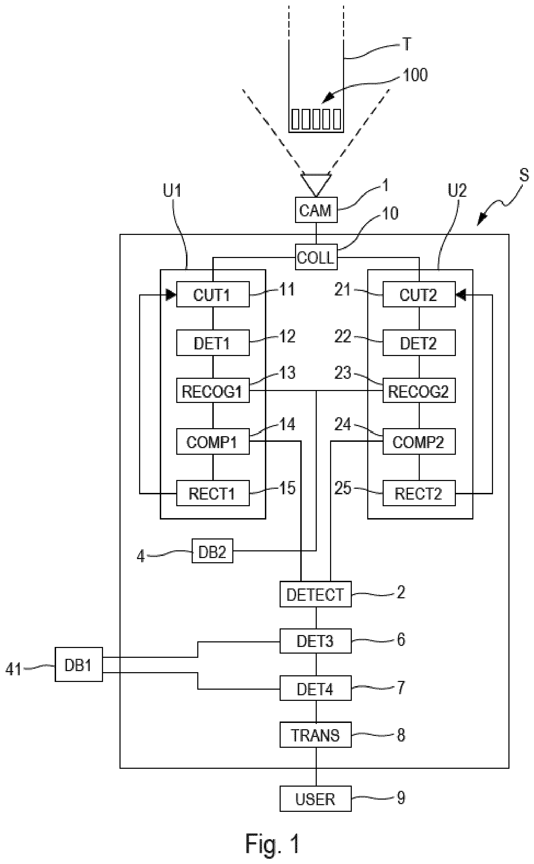

Le système de détection S est représenté schématiquement sur la figure 1. Il s'agit d'un système de détection d'au moins un élément de marquage au sol 100 d'au moins une piste d'atterrissage T. Le système de détection S est prévu pour être embarqué à bord d'un aéronef AC, en particulier un avion de transport.

On entend par « élément de marquage au sol » un motif tracé sur le sol de la piste d'atterrissage T et/ou un motif lumineux d'un dispositif lumineux d'approche de la piste d'atterrissage T. Les figures illustrent un exemple d'élément de marquage au sol 100 correspondant à un piano. Toutefois, le système de détection S peut être utilisé pour tout autres éléments de marquage au sol 100.

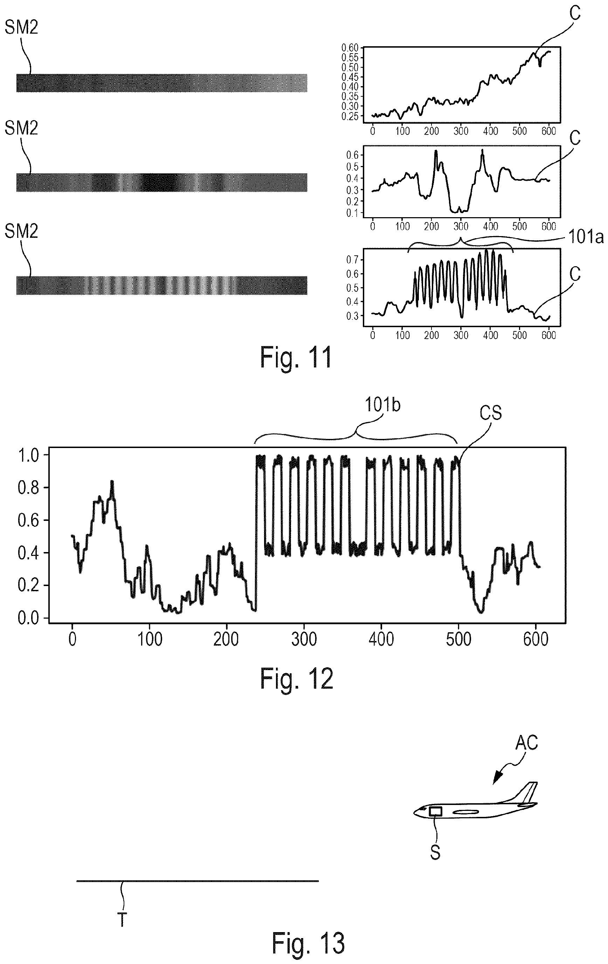

Le système de détection S peut être mis en oeuvre en vue d'un atterrissage d'un aéronef AC sur une piste d'atterrissage T (figure 13). Le système de détection S peut également être utilisé quand l'aéronef AC est au sol pendant une procédure de roulage. Ainsi le système de détection S peut aussi détecter des éléments de marquage au sol 100 d'une voie de circulation (« taxiway » en anglais) d'un aéroport.

Le système de détection S comprend au moins une unité de collecte d'images 10 (noté COLL pour « collecting unit » en anglais), un premier ensemble d'unités U1, une unité de détection 2 (noté DETECT pour « detecting unit » en anglais).

L'unité de collecte d'images 10 est configurée pour collecter au moins une image I captée par au moins une unité de capture d'images 1. La ou les images I sont sous forme d'une matrice de pixels M présentant une première dimension D1 et une deuxième dimension D2.

La ou les unités de capture d'images 1 peuvent correspondre chacune à une caméra embarquée à bord de l'aéronef AC.

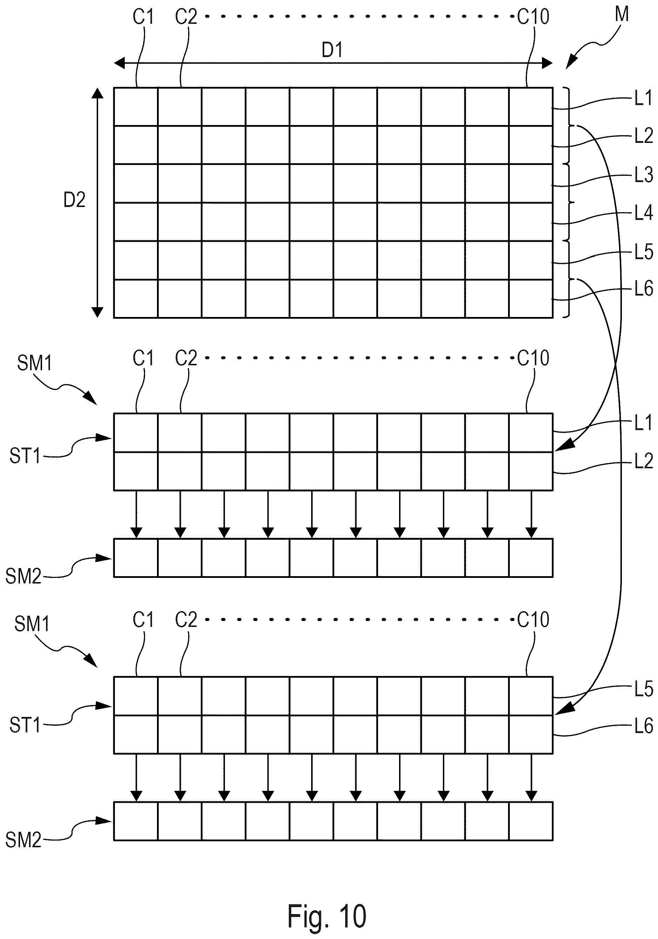

Dans un premier mode de réalisation, la première dimension D1 peut correspondre à un nombre de colonnes de pixels C1, C2, ..., C10 de la matrice de pixels M et la deuxième dimension D2 peut correspondre à un nombre de lignes L1, L2, L3, L4, L5, L6 de la matrice de pixels M. Sur l'exemple représenté sur la figure 10, la matrice de pixels M présente une première dimension D1 égale à 10 colonnes de pixels et une deuxième dimension égale à 6 lignes de pixels.

Dans un deuxième mode de réalisation (non représenté), la première dimension D1 peut correspondre à un nombre de lignes de pixels de la matrice de pixels M et la deuxième dimension D2 peut correspondre à un nombre de colonnes de la matrice de pixels M.

Le premier ensemble d'unités U1 comprend une première unité de découpage 11 (noté CUT pour « cutting unit » en anglais), une première unité de détermination 12 (noté DET pour « determining unit » en anglais) et une première unité de reconnaissance 13 (noté RECOG pour « récognition unit » en anglais).

La première unité de découpage 11 est configurée pour découper la matrice de pixels M en premières bandes ST1 parallèles. Chacune des premières bandes ST1 est associée à sa position respective dans la matrice de pixels M de la ou des images I. Chaque première bande ST1 correspond à une première sous-matrice SM1 présentant au moins une ligne de pixels L1, L2, L3, L4, L5, L6 et un nombre de colonnes de pixels C1, C2, ..., C10égal à la première dimension D1 de la matrice de pixels M.

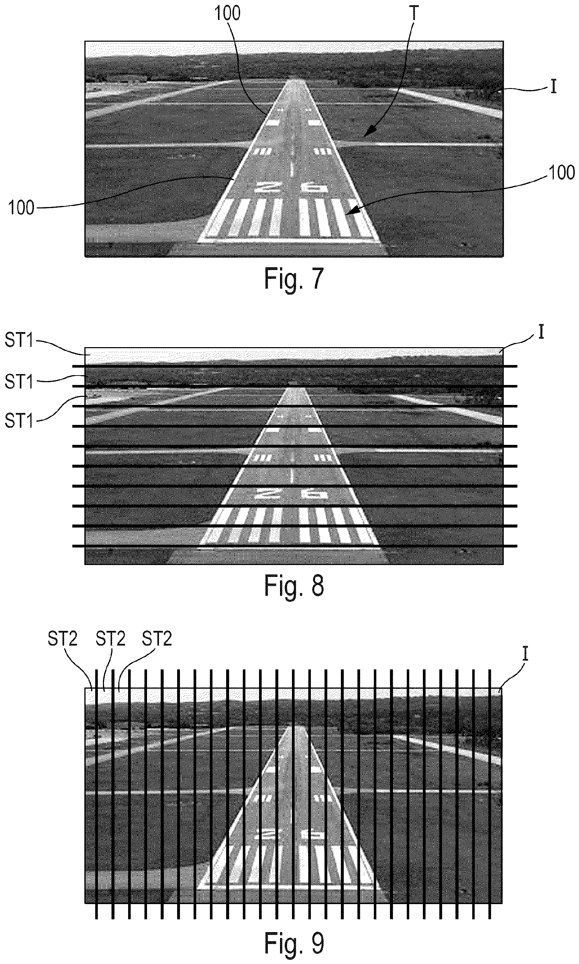

L'exemple de la figure 10 et de la figure 8 représente le découpage de la matrice de pixels M. Dans cet exemple, la première dimension D1 de la matrice de pixels M correspond à un nombre de colonnes de pixels C1, C2, ..., C10 et la deuxième dimension D2 de la matrice de pixels M correspond à un nombre de lignes L1, L2, L3, L4, L5, L6. Dans cet exemple, chaque première sous-matrice SM1 présente un nombre de colonnes de pixels C1, C2, ..., C10 égal à la première dimension D1 de la matrice de pixels M et un nombre de lignes de pixels L1, L2, L3, L4, L5, L6 égal à deux. Dans l'exemple de la figure 10, chaque première sous-matrice SM1 présente un nombre de colonnes de pixels égal à 10 colonnes de pixels et un nombre de lignes de pixels égal à 2 lignes de pixels.

De préférence, le nombre de lignes de pixels L1, L2, L3, L4, L5, L6 de chaque sous-matrice est égal à quatre.

La première unité de détermination 12 est configurée pour déterminer une courbe d'intensité moyenne C pour au moins une première bande ST1 sélectionnée parmi les premières bandes ST1 provenant du découpage de la matrice de pixels M par la première unité de découpage 11.

Une courbe d'intensité moyenne C peut être déterminée pour toutes les premières bandes ST1. Dans ce cas, toutes les premières bandes ST1 provenant du découpage de la matrice de pixels M sont sélectionnées.

Dans la description, l'intensité correspond à l'intensité lumineuse. De plus, on appelle « intensité d'un pixel », l'intensité lumineuse captée et codée par le pixel.

Toutefois, une courbe d'intensité moyenne C peut être déterminée pour une combinaison de premières bandes ST1. Dans ce cas, seules certaines premières bandes ST1 sont sélectionnées. Par exemple, elles peuvent être sélectionnées en fonction de leur position dans la matrice de pixels M.

Dans l'exemple de la figure 10, une courbe d'intensité moyenne C est déterminée pour les premières bandes correspondant à une première sous-matrice SM1 formée par les lignes L1 et L2 et à une première sous-matrice SM1 formée par les lignes L5 et L6.

La courbe d'intensité moyenne C est déterminée en calculant pour chaque colonne de pixels C1, C2, ..., C10 de la première sous-matrice SM1 de la ou des premières bandes ST1 sélectionnées une moyenne d'intensité du ou des pixels de chaque colonne de pixels C1, C2, ..., C10.

Ce calcul peut correspondre à une détermination d'une matrice de pixels SM2 comportant une ligne de pixels. Chaque pixel de cette ligne de pixels présente une intensité égale à la moyenne des intensités de pixels de la colonne à laquelle ledit pixel appartient. Comme représenté sur la figure 11, les courbes d'intensité moyenne C (à droite de la figure 11) sont alors déterminées à partir de ces matrices de pixels SM2 (à gauche de la figure 11). Chaque courbe d'intensité moyenne C comporte la position des pixels dans la matrice de pixel SM2 en abscisse et l'intensité moyenne de chacun des pixels de la matrice de pixels SM2 en ordonnée. La première unité de reconnaissance 13 est configurée pour reconnaître dans la courbe d'intensité moyenne C de la ou des premières bandes ST1 sélectionnées au moins une forme de courbe caractéristique d'au moins un élément de marquage au sol 100 d'au moins une piste d'atterrissage T.

L'élément de marquage au sol 1 00 peut correspondre au « piano » qui se trouve au seuil de la piste d'atterrissage T (figure 1, figure 7).

Sur la figure 11, la matrice de pixels SM2 qui se trouve en bas de la figure a été déterminée à partir d'une première sous-matrice SM1 dont la bande ST1 comprend un élément de marquage au sol 100 correspondant à un piano. Le piano correspond à un motif répété plusieurs fois horizontalement sur l'image I. La courbe d'intensité moyenne C déterminée à partir de la matrice de pixels SM2 représenté à droite de la matrice SM2 comporte l'information 101a de ce motif répété. La courbe d'intensité moyenne C peut donc comporter l'information caractéristique de l'élément de marquage au sol 100.

Selon un mode de réalisation préféré, le système de détection S peut comprendre en outre un deuxième ensemble d'unités U2 comprenant, une deuxième unité de découpage 21, une deuxième unité de détermination 22 et une deuxième unité de reconnaissance 23.

La deuxième unité de découpage 21 est configurée pour découper la matrice de pixels M en deuxièmes bandes ST2 parallèles associées chacune à une position respective de chaque deuxième bande ST2 dans la matrice de pixels M de la ou des images I. Chaque deuxième bande ST2 correspond à une deuxième sous-matrice présentant au moins une ligne de pixels L1, L2 et un nombre de colonnes de pixels C1, C2, ..., C10 égal à la deuxième dimension D2 de la matrice de pixels M.

La deuxième unité de détermination 22 configurée pour déterminer une courbe d'intensité moyenne C pour au moins une deuxième bande ST2 sélectionnée parmi les deuxièmes bandes ST2 provenant du découpage de la matrice de pixels M par la deuxième unité de découpage 21. La courbe d'intensité moyenne C est déterminée en calculant pour chaque colonne de pixels C1, C2, ..., C10 de la deuxième sous-matrice de la ou des deuxièmes bandes ST2 sélectionnées une moyenne d'intensité du ou des pixels de chaque colonne de pixels C1, C2, ..., C10. La courbe d'intensité moyenne peut être déterminée de la même manière que celle pour le premier ensemble d'unités U1.

Comme pour le premier ensemble d'unités U1, une courbe d'intensité moyenne C peut être déterminée pour toutes les deuxièmes bandes ST2. Dans ce cas, toutes les deuxièmes bandes ST2 provenant du découpage de la matrice de pixels M sont sélectionnées. Toutefois, une courbe d'intensité moyenne C peut être déterminée pour une combinaison de deuxièmes bandes ST2. Dans ce cas, seules certaines deuxièmes bandes ST2 sont sélectionnées. Par exemple, elles peuvent être sélectionnées en fonction de leur position dans la matrice de pixels M.

La deuxième unité de reconnaissance 23 est configurée pour reconnaître dans la courbe d'intensité moyenne C de la ou des deuxièmes bandes ST2 sélectionnées une forme de courbe caractéristique d'au moins un élément de marquage au sol 100 d'au moins une piste d'atterrissage T.

Grâce au deuxième ensemble d'unités U2 (avec le premier ensemble d'unités U1), il est possible de détecter les éléments de marquage au sol 100 s'étalant selon la première dimension D1 de l'image I et les éléments de marquage au sol s'étalant selon la deuxième dimension D2 de l'image I.

Dans le cas où le système de détection comprend seulement le premier ensemble d'unités U1, l'unité de détection 2 du système de détection S est configurée pour détecter une position du ou des éléments de marquage au sol 100 d'au moins une piste d'atterrissage T dans la ou les images I à partir du ou des éléments de marquage au sol 100 reconnus et de la position de la ou des premières bandes ST1 sélectionnées dans la matrice de pixels M de la ou des images I.

Dans le cas où le système de détection comprend le premier ensemble d'unités U1 et le deuxième ensemble d'unités U2, l'unité de détection 2 du système de détection S est configurée pour détecter une position du ou des éléments de marquage au sol 100 d'au moins une piste d'atterrissage T dans la ou les images I à partir du ou des éléments de marquage au sol 100 reconnus, de la position de la ou des premières bandes ST1 sélectionnées dans la matrice de pixels M de la ou des images I et de la position de la ou des deuxièmes bandes ST2 sélectionnées dans la matrice de pixels M de la ou des images I.

Le système de détection S peut aussi comprendre une troisième unité de détermination (DET3) 6 configurée pour déterminer une position d'au moins un seuil de la ou des pistes d'atterrissage T à partir de la position du ou des éléments de marquage au sol 100 détectés dans la ou les images I et de caractéristiques de la ou des pistes d'atterrissage T provenant d'une base de données de piste (DB1) 41. La base de données de piste 41 peut correspondre à une base de données de l'OACI (« Organisation de l'aviation civile internationale » ou ICAO pour « International Civil Aviation Organization » en anglais) dans l'annexe 14 de l'OACI. Le système de détection S peut aussi comprendre une quatrième unité de détermination (DET4) 7 configurée pour déterminer une position de l'aéronef AC à partir de la position du ou des seuils de la ou des pistes d'atterrissage T dans l'image I, d'une position et angles de la ou des unités de collecte d'image 10 et des caractéristiques de la ou des pistes d'atterrissage T provenant de la base de données de piste 41.

Quand l'aéronef AC est en vol en vue d'un atterrissage sur une piste d'atterrissage T, la quatrième unité de détermination 7 détermine la position latérale et la position verticale de l'aéronef AC. Quand l'aéronef AC est en procédure de roulage, la quatrième unité de détermination 7 détermine la position latérale de l'aéronef AC. Le système de détection S peut aussi comprendre une unité de transmission 8. L'unité de transmission (TRANS pour « transmission unit » en anglais) 8 peut être configurée pour transmettre à un dispositif utilisateur 9 un signal représentatif :
- de la position d'au moins un seuil de la ou des pistes d'atterrissage T (déterminée par la troisième unité de détermination 6), ou
- de la position de l'aéronef AC (déterminée par la quatrième unité de détermination 7), ou
- de la position du ou des éléments de marquage au sol 100 d'au moins une piste d'atterrissage T dans la ou les images I (déterminée par l'unité de détection 2).

Le dispositif utilisateur 9 peut correspondre à un dispositif d'affichage. Grâce à la position détectée du ou des éléments de marquage au sol 100 d'au moins une piste d'atterrissage T dans la ou les images I, le dispositif d'affichage peut superposer l'image I de la piste d'atterrissage T et des éléments graphiques qui soulignent les éléments de marquage au sol 100 de la piste d'atterrissage T.

Le dispositif utilisateur 9 peut aussi correspondre à un système de commande de vol de l'aéronef AC. La connaissance de la position du seuil de la piste d'atterrissage T dans l'image I, la connaissance de la position et angles de l'unité de collecte d'image 10 et la connaissance des caractéristiques de la piste d'atterrissage T, telle que sa largeur, peuvent permettre de déterminer la position verticale et la position latérale de l'aéronef AC. Les caractéristiques de la piste d'atterrissage T peuvent comprendre les coordonnées géographiques (latitude, longitude, altitude) du marquage au sol considéré par exemple, l'orientation angulaire de la piste en largeur, en longueur, etc. Ces caractéristiques de la piste d'atterrissage T peuvent provenir de la base de données 41.

Selon une première configuration, la première unité de reconnaissance 13 peut être configurée pour reconnaître une forme de courbe caractéristique d'au moins un élément de marquage au sol 100 de la ou des pistes d'atterrissage T dans la courbe d'intensité moyenne C de la ou des premières bandes ST1 sélectionnées à l'aide d'un réseau neuronal.

Selon le mode de réalisation préféré dans la première configuration, la deuxième unité de reconnaissance 23 est en outre configurée pour reconnaître une forme de courbe caractéristique d'au moins un élément de marquage au sol 100 de la ou des pistes d'atterrissage T dans la courbe d'intensité moyenne C de la ou des deuxièmes bandes ST2 sélectionnées à l'aide d'un réseau neuronal.

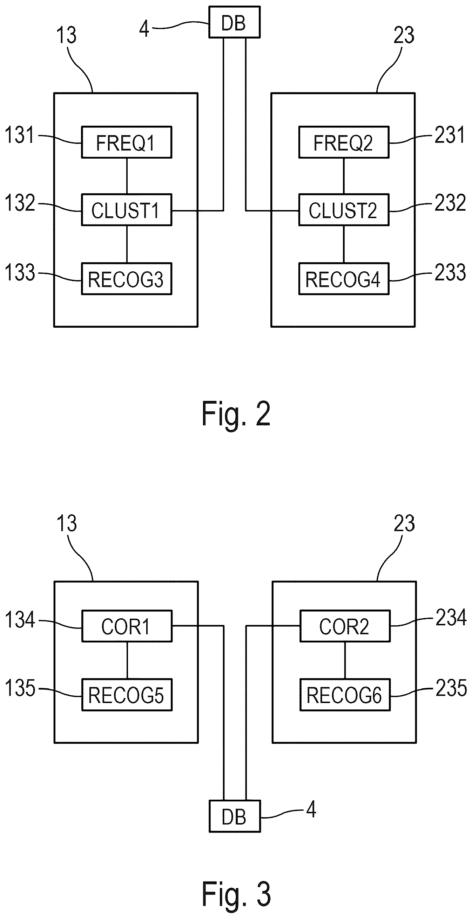

Selon une deuxième configuration (figure 2), la première unité de reconnaissance 13 peut aussi comprendre une première sous-unité d'analyse fréquentielle 131 (noté FREQ pour « frequency analysis unit » en anglais), une première sous-unité de partitionnement de données 132 (noté CLUST pour « clustering unit » en anglais) et une première sous-unité de reconnaissance 133.

La première sous-unité d'analyse fréquentielle 131 est configurée pour détecter au moins une harmonique dans la courbe d'intensité moyenne C de la ou des premières bandes ST1 sélectionnées.

La première sous-unité de partitionnement de données 132 est configurée pour former au moins un groupe comportant une ou des harmoniques caractéristiques d'un élément de marquage au sol 100 de la ou des pistes d'atterrissage T. La ou les harmoniques caractéristiques d'un élément de marquage au sol 100 sont stockées dans une base de données 4 (noté DB2 pour « database » en anglais).

La sous-unité de reconnaissance 133 est configurée pour reconnaître au moins un élément de marquage au sol 100 de la ou des pistes d'atterrissage T pour le groupe formé ou les groupes formés par la première sous-unité de partitionnement de données 132.

Selon le mode de réalisation préféré dans la deuxième configuration (figure 2), la deuxième unité de reconnaissance 23 peut comprendre en outre une deuxième sous-unité d'analyse fréquentielle 231, une deuxième sous-unité de partitionnement de données 232 et une deuxième sous-unité de reconnaissance 233.

La deuxième sous-unité d'analyse fréquentielle 231 est configurée pour détecter au moins une harmonique dans la courbe d'intensité moyenne C de la ou des deuxièmes bandes ST2 sélectionnées.

La deuxième sous-unité de partitionnement de données 232 est configurée pour former au moins un groupe comportant une ou des harmoniques caractéristiques d'un élément de marquage au sol 100 de la ou des pistes d'atterrissage T. La ou les harmoniques caractéristiques d'un élément de marquage au sol 100 sont également stockées dans une base de données 4.

La deuxième sous-unité de reconnaissance 233 est configurée pour reconnaître au moins un élément de marquage au sol 100 de la ou des pistes d'atterrissage T pour le groupe formé ou les groupes formés par la deuxième sous-unité de partitionnement de données 232.

Selon une troisième configuration (figure 3), la première unité de reconnaissance 13 comprend une première sous-unité de corrélation 134 (noté COR pour « corrélation unit » en anglais) et une première sous-unité de reconnaissance 135. La première sous-unité de corrélation 134 est configurée pour déterminer au moins un paramètre de corrélation entre la courbe d'intensité moyenne C de la ou des premières bandes ST1 sélectionnées avec au moins une courbe synthétique CS caractéristique d'un élément de marquage au sol 100. La ou les courbes synthétiques CS sont stockées dans une base de données 4. La figure 12 représente un exemple de courbe synthétique CS.

La première sous-unité de reconnaissance 135 est configurée pour reconnaître au moins un élément de marquage au sol 100 de la ou des pistes d'atterrissage T si le paramètre de corrélation déterminé par la première sous-unité de corrélation 134 est supérieure ou égale à une valeur prédéterminée.

Selon le mode de réalisation préféré dans la troisième configuration (figure 3), la deuxième unité de reconnaissance 23 peut comprendre en outre une deuxième sous-unité de corrélation 234 et une deuxième sous-unité de reconnaissance 235. La deuxième sous-unité de corrélation 234 est configurée pour déterminer au moins un paramètre de corrélation entre la courbe d'intensité moyenne C de la ou des deuxièmes bandes ST2 sélectionnées avec au moins une courbe synthétique CS caractéristique d'un élément de marquage au sol 100. La ou les courbes synthétiques CS sont stockées dans la base de données 4. La base de données 4 peut comporter une pluralité de courbes synthétiques CS. Chacune des courbes synthétiques CS peut comprendre des informations caractéristiques d'un élément de marquage au sol 100. Par exemple, une courbe synthétique CS peut comprendre les informations caractéristiques de l'élément de marquage 100 du piano.

La deuxième sous-unité de reconnaissance 235 est configurée pour reconnaître au moins un élément de marquage au sol 100 de la ou des pistes d'atterrissage T si le paramètre de corrélation déterminé par la deuxième sous-unité de corrélation 234 est supérieure ou égale à une valeur prédéterminée.

La courbe synthétique CS représentée sur la figure 12 comporte l'information 101b caractéristique de l'élément de marquage au sol 100 du piano. La courbe d'intensité moyenne C représentée en bas à droite de la figure 11 comporte également l'information 101a caractéristique de l'élément de marquage au sol 100 du piano. Ainsi, la mise en oeuvre de la première sous-unité de corrélation 134 permet de déterminer un paramètre de corrélation qui est supérieure ou égale à la valeur prédéterminée. Le piano est donc reconnu par la sous-unité de reconnaissance 235. Par ailleurs, le premier ensemble d'unités U1 peut comprendre une première unité de comparaison 14 (noté COMP pour « comparison unit » en anglais) et une première unité de redressement 15 (noté RECT pour « rectifying unit » en anglais). Tout autre élément de marquage au sol 100 peut être reconnu de la même manière par la sous-unité de reconnaissance 235.

La première unité de comparaison 14 est configurée pour comparer les courbes d'intensité moyenne C pour lesquelles un même élément de marquage au sol 100 a été reconnu afin de déterminer ou non un décalage entre lesdites courbes d'intensité moyenne C.

La première unité de redressement 15 est mise en oeuvre si un décalage a été déterminé. Elle est configurée pour redresser la matrice de pixels M de la ou des images I en fonction du décalage déterminé.

Le premier ensemble d'unités U1 est alors encore mise en oeuvre avec la matrice de pixels M de la ou des images I redressées par la première sous-unité de redressement 15.

Selon le mode de réalisation préféré, le deuxième ensemble d'unités U2 comprend également une deuxième unité de comparaison 24 et une deuxième unité de redressement 25.

La deuxième unité de comparaison 24 est configurée pour comparer les courbes d'intensité moyenne C pour lesquelles un même élément de marquage au sol 100 a été reconnu afin de déterminer ou non un décalage entre lesdites courbes d'intensité moyenne C.

La deuxième unité de redressement 25 est mise en oeuvre si un décalage a été déterminé. Elle est configurée pour redresser la matrice de pixels M de la ou des images I en fonction du décalage déterminé.

Le deuxième ensemble d'unités U2 étant alors encore mise en oeuvre avec la matrice de pixels M de la ou des images I redressées par la deuxième sous-unité de redressement 25.

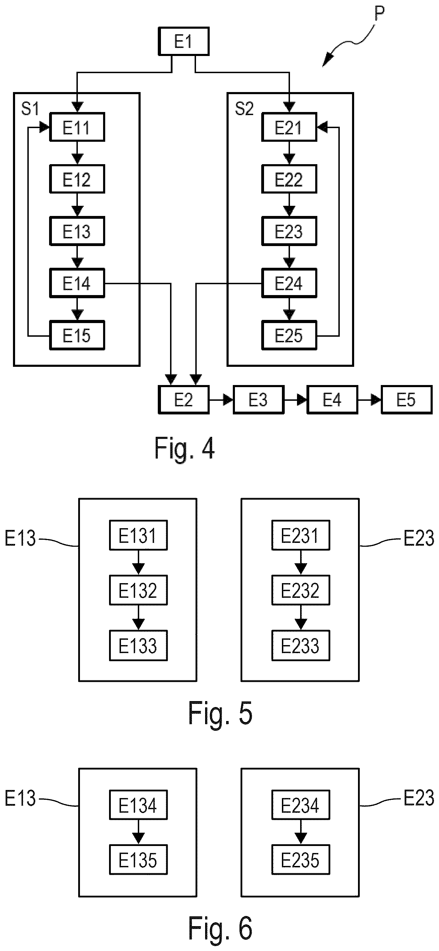

L'invention concerne également un procédé de détection P d'au moins un élément de marquage au sol d'au moins une piste d'atterrissage (figure 4).

Le procédé de détection P comprend au moins les étapes suivantes :
- une étape E1 de collecte d'images, mise en oeuvre par l'unité de collecte d'images 10, pour collecter au moins une image I captée par au moins une unité de capture d'images 1, la ou les images I étant sous forme d'une matrice de pixels M présentant une première dimension D1 et une deuxième dimension D2,
- un premier ensemble d'étapes S1 comprenant :
   ∘ une première étape E 11 de découpage, mise en oeuvre par la première unité de découpage 11, pour découper la matrice de pixels M en premières bandes parallèles ST1 associées chacune à une position respective de chaque première bande ST1 dans la matrice de pixels M de la ou des images I, chaque première bande ST1 correspondant à une première sous-matrice SM1 présentant au moins une ligne de pixels L1, L2 et un nombre de colonnes de pixels C1, C2, ..., C10 égal à la première dimension D1 de la matrice de pixels M,
   ∘ une première étape E12 de détermination, mise en oeuvre par la première unité de détermination 12, pour déterminer une courbe d'intensité moyenne C pour au moins une première bande ST1 sélectionnée parmi les premières bandes ST1 provenant du découpage de la matrice de pixels M, la courbe d'intensité moyenne C étant déterminée en calculant pour chaque colonne de pixels C1, C2, ..., C10 de la première sous-matrice SM1 de la ou des premières bandes ST1 sélectionnées une moyenne d'intensité du ou des pixels de chaque colonne de pixels C1, C2, ..., C10,
   ∘ une première étape E13 de reconnaissance, mise en oeuvre par la première unité de reconnaissance 13, pour reconnaître dans la courbe d'intensité moyenne C de la ou des premières bandes ST1 sélectionnées une forme de courbe caractéristique d'au moins un élément de marquage au sol 100 d'au moins une piste d'atterrissage T.

Le procédé de détection comprend en outre :
- une étape E2 de détection, mise en oeuvre par l'unité de détection 2, pour détecter une position du ou des éléments de marquage au sol 100 d'au moins une piste d'atterrissage T dans la ou les images I à partir du ou des éléments de marquage au sol 100 reconnus et de la position de la ou des premières bandes ST1 sélectionnées dans la matrice de pixels M de la ou des images I.

Selon le mode de réalisation préféré, le procédé de détection P comprend en outre un deuxième ensemble d'étapes S2 précédant l'étape E2 de détection.

Le deuxième ensemble d'étapes S2 comprend :
- une deuxième étape E21 de découpage, mise en oeuvre par la deuxième unité de découpage 21, pour découper la matrice de pixels M en deuxièmes bandes parallèles ST2 associées chacune à une position respective de chaque deuxième bande ST2 dans la matrice de pixels M de la ou des images I, chaque deuxième bande ST2 correspondant à une deuxième sous-matrice présentant au moins une ligne de pixels L1, L2 et un nombre de colonnes de pixels C1, C2, ..., C10 égal à la deuxième dimension D2 de la matrice de pixels M,
- une deuxième étape E22 de détermination, mise en oeuvre par la deuxième unité de détermination 22, pour déterminer une courbe d'intensité moyenne C pour au moins une deuxième bande ST2 sélectionnée parmi les deuxièmes bandes ST2 provenant du découpage de la matrice de pixels M, la courbe d'intensité moyenne C étant déterminée en calculant pour chaque colonne de pixels C1, C2, ..., C10 de la deuxième sous-matrice de la ou des deuxièmes bandes ST1 sélectionnées une moyenne d'intensité du ou des pixels de chaque colonne de pixels C1, C2, ..., C10,
- une deuxième étape E23 de reconnaissance, mise en oeuvre par la deuxième unité de reconnaissance 23, pour reconnaître dans la courbe d'intensité moyenne C de la ou des deuxièmes bandes ST2 sélectionnées une forme de courbe caractéristique d'au moins un élément de marquage au sol 100 d'au moins une piste d'atterrissage T.

Dans le mode de réalisation préféré, l'étape E2 de détection est mise en oeuvre pour détecter une position du ou des éléments de marquage au sol 100 d'au moins une piste d'atterrissage T dans la ou les images I à partir du ou des éléments de marquage au sol 100 reconnus, de la position de la ou des premières bandes ST1 sélectionnées dans la matrice de pixels M de la ou des images I et de la position de la ou des deuxièmes bandes ST2 sélectionnées dans la matrice de pixels M de la ou des images I.

Selon une première variante, la première étape E13 de reconnaissance et/ou la deuxième étape E23 de reconnaissance sont mises en oeuvre pour reconnaître une forme de courbe caractéristique d'au moins un élément de marquage au sol 100 de la piste d'atterrissage T dans la courbe d'intensité moyenne C de la ou des premières bandes ST1 sélectionnées et/ou de la ou des deuxièmes bandes ST2 sélectionnées à l'aide d'un réseau neuronal.

Les courbes d'intensité moyenne C peuvent également être utilisées pour entraîner le réseau neuronal.

Selon une deuxième variante (figure 5), la première étape E13 de reconnaissance comprend les sous-étapes suivantes :
- une première sous-étape E131 d'analyse fréquentielle, mise en oeuvre par la première sous-unité d'analyse fréquentielle 131, pour détecter au moins une harmonique dans la courbe d'intensité moyenne C de la ou des premières bandes ST1 sélectionnées,
- une première sous-étape E132 de partitionnement de données, mise en oeuvre par la première sous-unité de partitionnement de données 132, pour former au moins un groupe comportant une ou des harmoniques caractéristiques d'un élément de marquage au sol 100 de la piste d'atterrissage T, la ou les harmoniques caractéristiques d'un élément de marquage au sol 100 étant stockées dans la base de données 4,
- une première sous-étape E133 de reconnaissance, mise en oeuvre par une première sous-unité de reconnaissance 133, pour reconnaître au moins un élément de marquage au sol 100 de la ou des pistes d'atterrissage T pour le groupe formé ou les groupes formés dans la première sous-étape E132 de partitionnement de données.

Selon le mode de réalisation préféré pour la deuxième variante (figure 5), la deuxième étape E23 de reconnaissance comprend les sous-étapes suivantes :
- une deuxième sous-étape E231 d'analyse fréquentielle, mise en oeuvre par la deuxième sous-unité d'analyse fréquentielle 231, pour détecter au moins une harmonique dans la courbe d'intensité moyenne C de la ou des deuxièmes bandes ST2 sélectionnées,
- une deuxième sous-étape E232 de partitionnement de données, mise en oeuvre par la deuxième sous-unité de partitionnement de données 232, pour former au moins un groupe comportant une ou des harmoniques caractéristiques d'un élément de marquage au sol 100 de la piste d'atterrissage T, la ou les harmoniques caractéristiques d'un élément de marquage au sol 100 étant stockées dans la base de données 4,
- une deuxième sous-étape E233 de reconnaissance, mise en oeuvre par la deuxième sous-unité de reconnaissance 233, pour reconnaître au moins un élément de marquage au sol 100 de la ou des pistes d'atterrissage T pour le groupe formé ou les groupes formés dans la deuxième sous-étape E232 de partitionnement de données.

Selon une troisième variante (figure 6), la première étape E13 de reconnaissance comprend les sous-étapes suivantes :
- une première sous-étape E134 de corrélation, mise en oeuvre par la première sous-unité de corrélation 134, pour déterminer au moins un paramètre de corrélation entre la courbe d'intensité moyenne C de la ou des premières bandes ST1 sélectionnées avec au moins une courbe synthétique CS caractéristique d'un élément de marquage au sol 100, la ou les courbes synthétiques CS étant stockées dans une base de données 4,
- une première sous-étape E135 de reconnaissance, mise en oeuvre par la première sous-unité de reconnaissance 135, pour reconnaître au moins un élément de marquage au sol 100 de la ou des pistes d'atterrissage T si le paramètre de corrélation déterminé dans la première sous-étape E134 de corrélation est supérieure ou égale à une valeur prédéterminée.

Selon le mode de réalisation préféré pour la troisième variante (figure 6), la deuxième étape E23 de reconnaissance comprend les sous-étapes suivantes :
- une deuxième sous-étape E234 de corrélation, mise en oeuvre par la deuxième sous-unité de corrélation 234, pour déterminer au moins un paramètre de corrélation entre la courbe d'intensité moyenne C de la ou des deuxièmes bandes ST2 sélectionnées avec au moins une courbe synthétique CS caractéristique d'un élément de marquage au sol 100, la ou les courbes synthétiques CS étant stockées dans une base de données 4,
- une deuxième sous-étape E235 de reconnaissance, mise en oeuvre par la deuxième sous-unité de reconnaissance 235, pour reconnaître au moins un élément de marquage au sol 100 de la ou des pistes d'atterrissage T si le paramètre de corrélation déterminé dans la deuxième sous-étape E234 de corrélation est supérieure ou égale à une valeur prédéterminée.

Par ailleurs, le premier ensemble d'étapes S1 peut comprendre :
- une première étape E14 de comparaison, mise en oeuvre par la première unité de comparaison 14, pour comparer les courbes d'intensité moyenne C pour lesquelles un même élément de marquage au sol 100 a été reconnu afin de déterminer ou non un décalage entre lesdites courbes d'intensité moyenne C,
- une première étape E15 de redressement, mise en oeuvre par la première unité de redressement 15 si un décalage a été déterminé, pour redresser la matrice de pixels M de la ou des images I en fonction du décalage déterminé.

Le premier ensemble d'étapes S1 peut alors être répété avec la matrice de pixels M de la ou des images I redressées à la première étape E14 de redressement.

Selon le mode de réalisation préféré, le deuxième ensemble d'étapes S2 peut comprendre :
- une deuxième étape E24 de comparaison, mise en oeuvre par la deuxième unité de comparaison 24, pour comparer les courbes d'intensité moyenne C pour lesquelles un même élément de marquage au sol 100 a été reconnu afin de déterminer ou non un décalage entre lesdites courbes d'intensité moyenne C,
- une deuxième étape E25 de redressement, mise en oeuvre par la deuxième unité de redressement 25 si un décalage a été déterminé, pour redresser la matrice de pixels M de la ou des images I en fonction du décalage déterminé.

Le deuxième ensemble d'étapes S2 peut alors être répété avec la matrice de pixels M de la ou des images I redressées à la deuxième étape E24 de redressement.

Le procédé de détection P peut aussi comprendre une troisième étape E3 de détermination, mise en oeuvre par la troisième unité de détermination 6, pour déterminer une position d'au moins un seuil de la ou des pistes d'atterrissage T à partir de la position du ou des éléments de marquage au sol 100 détectés dans la ou les images I et de caractéristiques de la ou des pistes d'atterrissage T provenant d'une base de données 41 de piste.

Le procédé de détection P peut également comprendre une quatrième étape E4 de détermination, mise en oeuvre par la quatrième unité de détermination 7, pour déterminer une position de l'aéronef AC à partir de la position du ou des seuils de la ou des pistes d'atterrissage T dans l'image I, d'une position et angles de la ou des unités de collecte d'image 10 et des caractéristiques de la ou des pistes d'atterrissage T provenant de la base de données 41 de piste.

Le procédé de détection P peut aussi comprendre une étape de transmission E5, mise en oeuvre par l'unité de transmission 8, pour transmettre à un dispositif utilisateur 9 un signal représentatif de la position d'au moins un seuil de la ou des pistes d'atterrissage T ou de la position de l'aéronef AC, ou de la position du ou des éléments de marquage au sol 100 d'au moins une piste d'atterrissage T dans la ou les images I.

Le système de détection S et le procédé de détection P présentent de nombreux avantages, en particulier :
- À des fins de tests ou d'entraînement dans le cas d'un modèle d'apprentissage profond, la gestion des données se trouve facilitée. En effet, les signaux à une dimension (les courbes d'intensité moyenne C) sont significativement moins lourds que les signaux à deux dimensions (les images I). Cela apporte un avantage pour le transfert de données, le stockage de données et le traitement de données.
- Le traitement de signaux à une dimension est également plus rapide que le traitement de signaux à deux dimensions. Cela permet de réduire les capacités de calcul du matériel de calcul à embarqué à bord d'un aéronef AC et de réduire en conséquence leur coût et leur consommation électrique.
- En ce qui concerne les données qui peuvent être utilisées pour des tests ou des entraînements de réseau neuronaux, la génération de signaux synthétiques à une dimension (les courbes) est plus facile à mettre en oeuvre et est moins onéreux que la génération d'images à deux dimensions d'une piste d'atterrissage qui nécessite la mise en oeuvre d'outils et de simulateurs onéreux.
- Un autre avantage dans le contexte aéronautique est l'aspect lié à l'explicabilité. Un algorithme basé sur de l'apprentissage profond sera une boite noire en termes d'explication sur les résultats en sortie du réseau neuronal. Le procédé proposé permet de comprendre bien plus facilement pourquoi un résultat particulier a été observé. Car, les techniques de traitement du signal ont déjà été largement certifiées dans le domaine aéronautique.

## Revendications

1. Procédé de détection d'au moins un élément de marquage au sol d'au moins une piste d'atterrissage,
**caractérisé en ce qu'**il comprend au moins les étapes suivantes :
- une étape (E1) de collecte d'images, mise en oeuvre par une unité de collecte d'images (10), pour collecter au moins une image (I) captée par au moins une unité de capture d'images (1), la ou les images (I) étant sous forme d'une matrice de pixels (M) présentant une première dimension (D1) et une deuxième dimension (D2),
- un premier ensemble d'étapes (S1) comprenant :
∘ une première étape (E11) de découpage, mise en oeuvre par une première unité de découpage (11), pour découper la matrice de pixels (M) en premières bandes parallèles (ST1) associées chacune à une position respective de chaque première bande (ST1) dans la matrice de pixels (M) de la ou des images (I), chaque première bande (ST1) correspondant à une première sous-matrice (SM1) présentant au moins une ligne de pixels (L1, L2) et un nombre de colonnes de pixels (C1, C2, ..., C10) égal à la première dimension (D1) de la matrice de pixels (M),
∘ une première étape (E12) de détermination, mise en oeuvre par une première unité de détermination (12), pour déterminer une courbe d'intensité moyenne (C) pour au moins une première bande (ST1) sélectionnée parmi les premières bandes (ST1) provenant du découpage de la matrice de pixels (M), la courbe d'intensité moyenne (C) étant déterminée en calculant pour chaque colonne de pixels (C1, C2, ..., C10) de la première sous-matrice (SM1) de la ou des premières bandes (ST1) sélectionnées une moyenne d'intensité du ou des pixels de chaque colonne de pixels (C1, C2, ..., C10),
∘ une première étape (E13) de reconnaissance, mise en oeuvre par une première unité de reconnaissance (13), pour reconnaître dans la courbe d'intensité moyenne (C) de la ou des premières bandes (ST1) sélectionnées une forme de courbe caractéristique d'au moins un élément de marquage au sol (100) d'au moins une piste d'atterrissage (T),
le procédé de détection comprenant en outre une étape (E2) de détection, mise en oeuvre par une unité de détection (2), pour détecter une position du ou des éléments de marquage au sol (100) d'au moins une piste d'atterrissage (T) dans la ou les images (I) à partir du ou des éléments de marquage au sol (100) reconnus et de la position de la ou des premières bandes (ST1) sélectionnées dans la matrice de pixels (M) de la ou des images (I).

2. Procédé selon la revendication 1,
**caractérisée en ce qu'**il comprend un deuxième ensemble d'étapes (S2) précédant l'étape (E2) de détection, le deuxième ensemble d'étapes (S2) comprenant :
- une deuxième étape (E21) de découpage, mise en oeuvre par une deuxième unité de découpage (21), pour découper la matrice de pixels (M) en deuxièmes bandes parallèles (ST2) associées chacune à une position respective de chaque deuxième bande (ST2) dans la matrice de pixels (M) de la ou des images (I), chaque deuxième bande (ST2) correspondant à une deuxième sous-matrice présentant au moins une ligne de pixels (L1, L2) et un nombre de colonnes de pixels (C1, C2, ..., C10) égal à la deuxième dimension (D2) de la matrice de pixels (M),
- une deuxième étape (E22) de détermination, mise en oeuvre par une deuxième unité de détermination (22), pour déterminer une courbe d'intensité moyenne (C) pour au moins une deuxième bande (ST2) sélectionnée parmi les deuxièmes bandes (ST2) provenant du découpage de la matrice de pixels (M), la courbe d'intensité moyenne (C) étant déterminée en calculant pour chaque colonne de pixels (C1, C2, ..., C10) de la deuxième sous-matrice de la ou des deuxièmes bandes (ST1) sélectionnées une moyenne d'intensité du ou des pixels de chaque colonne de pixels (C1, C2, ..., C10),
- une deuxième étape (E23) de reconnaissance, mise en oeuvre par une deuxième unité de reconnaissance (23), pour reconnaître dans la courbe d'intensité moyenne (C) de la ou des deuxièmes bandes (ST2) sélectionnées une forme de courbe caractéristique d'au moins un élément de marquage au sol (100) d'au moins une piste d'atterrissage (T),
l'étape (E2) de détection étant mise en oeuvre pour détecter une position du ou des éléments de marquage au sol (100) d'au moins une piste d'atterrissage (T) dans la ou les images (I) à partir du ou des éléments de marquage au sol (100) reconnus, de la position de la ou des premières bandes (ST1) sélectionnées dans la matrice de pixels (M) de la ou des images (I) et de la position de la ou des deuxièmes bandes (ST2) sélectionnées dans la matrice de pixels (M) de la ou des images (I).

3. Procédé selon l'une des revendications 1 ou 2,
**caractérisée en ce que** la première étape (E13) de reconnaissance et/ou la deuxième étape (E23) de reconnaissance sont mises en oeuvre pour reconnaître une forme de courbe caractéristique d'au moins un élément de marquage au sol (100) de la ou des pistes d'atterrissage (T) dans la courbe d'intensité moyenne (C) de la ou des premières bandes (ST1) sélectionnées et/ou de la ou des deuxièmes bandes (ST2) sélectionnées à l'aide d'un réseau neuronal.

4. Procédé selon l'une des revendications 1 ou 2,
**caractérisé en ce que** la première étape (E13) de reconnaissance comprend les sous-étapes suivantes :
- une première sous-étape (E131) d'analyse fréquentielle, mise en oeuvre par une première sous-unité d'analyse fréquentielle (131), pour détecter au moins une harmonique dans la courbe d'intensité moyenne (C) de la ou des premières bandes (ST1) sélectionnées,
- une première sous-étape (E132) de partitionnement de données, mise en oeuvre par une première sous-unité de partitionnement de données (132), pour former au moins un groupe comportant une ou des harmoniques caractéristiques d'un élément de marquage au sol (100) de la piste d'atterrissage (T), la ou les harmoniques caractéristiques d'un élément de marquage au sol (100) étant stockées dans une base de données (4),
- une première sous-étape (E133) de reconnaissance, mise en oeuvre par une première sous-unité de reconnaissance (133), pour reconnaître au moins un élément de marquage au sol (100) de la ou des pistes d'atterrissage (T) pour le groupe formé ou les groupes formés dans la première sous-étape (E132) de partitionnement de données.

5. Procédé selon la revendication 4,
**caractérisé en ce que** la deuxième étape (E23) de reconnaissance comprend les sous-étapes suivantes :
- une deuxième sous-étape (E231) d'analyse fréquentielle, mise en oeuvre par une deuxième sous-unité d'analyse fréquentielle (231), pour détecter au moins une harmonique dans la courbe d'intensité moyenne (C) de la ou des deuxièmes bandes (ST2) sélectionnées,
- une deuxième sous-étape (E232) de partitionnement de données, mise en oeuvre par une deuxième sous-unité de partitionnement de données (232), pour former au moins un groupe comportant une ou des harmoniques caractéristiques d'un élément de marquage au sol (100) de la piste d'atterrissage (T), la ou les harmoniques caractéristiques d'un élément de marquage au sol (100) étant stockées dans une base de données (4),
- une deuxième sous-étape (E233) de reconnaissance, mise en oeuvre par une deuxième sous-unité de reconnaissance (233), pour reconnaître au moins un élément de marquage au sol (100) de la ou des pistes d'atterrissage (T) pour le groupe formé ou les groupes formés dans la deuxième sous-étape (E232) de partitionnement de données.

6. Procédé selon l'une des revendications 1 ou 2,
**caractérisé en ce que** la première étape (E13) de reconnaissance comprend les sous-étapes suivantes :
- une première sous-étape (E134) de corrélation, mise en oeuvre par une première sous-unité de corrélation (134), pour déterminer au moins un paramètre de corrélation entre la courbe d'intensité moyenne (C) de la ou des premières bandes (ST1) sélectionnées avec au moins une courbe synthétique (CS) caractéristique d'un élément de marquage au sol (100), la ou les courbes synthétiques (CS) étant stockées dans une base de données (4),
- une première sous-étape (E135) de reconnaissance, mise en oeuvre par une première sous-unité de reconnaissance (135), pour reconnaître au moins un élément de marquage au sol (100) de la ou des pistes d'atterrissage (T) si le paramètre de corrélation déterminé dans la première sous-étape (E134) de corrélation est supérieure ou égale à une valeur prédéterminée.

7. Procédé selon la revendication 6,
**caractérisé en ce que** la deuxième étape (E23) de reconnaissance comprend les sous-étapes suivantes :
- une deuxième sous-étape (E234) de corrélation, mise en oeuvre par une deuxième sous-unité de corrélation (234), pour déterminer au moins un paramètre de corrélation entre la courbe d'intensité moyenne (C) de la ou des deuxièmes bandes (ST2) sélectionnées avec au moins une courbe synthétique (CS) caractéristique d'un élément de marquage au sol (100), la ou les courbes synthétiques (CS) étant stockées dans une base de données (4),
- une deuxième sous-étape (E235) de reconnaissance, mise en oeuvre par une deuxième sous-unité de reconnaissance (235), pour reconnaître au moins un élément de marquage au sol (100) de la ou des pistes d'atterrissage (T) si le paramètre de corrélation déterminé dans la deuxième sous-étape (E234) de corrélation est supérieure ou égale à une valeur prédéterminée.

8. Procédé selon l'une des revendications 1 à 5,
**caractérisée en ce que** le premier ensemble d'étapes (S1) comprend :
- une première étape (E14) de comparaison, mise en oeuvre par une première unité de comparaison (14), pour comparer les courbes d'intensité moyenne (C) pour lesquelles un même élément de marquage au sol (100) a été reconnu afin de déterminer ou non un décalage entre lesdites courbes d'intensité moyenne (C),
- une première étape (E15) de redressement, mise en oeuvre par une première unité de redressement (15) si un décalage a été déterminé, pour redresser la matrice de pixels (M) de la ou des images (I) en fonction du décalage déterminé,
le premier ensemble d'étapes (S1) étant répété avec la matrice de pixels (M) de la ou des images (I) redressée à la première étape (E14) de redressement.

9. Procédé selon la revendication 8,
**caractérisée en ce que** le deuxième ensemble d'étapes (S2) comprend :
- une deuxième étape (E24) de comparaison, mise en oeuvre par une deuxième unité de comparaison (24), pour comparer les courbes d'intensité moyenne (C) pour lesquelles un même élément de marquage au sol (100) a été reconnu afin de déterminer ou non un décalage entre lesdites courbes d'intensité moyenne (C),
- une deuxième étape (E25) de redressement, mise en oeuvre par une deuxième unité de redressement (25) si un décalage a été déterminé, pour redresser la matrice de pixels (M) de la ou des images (I) en fonction du décalage déterminé,
le deuxième ensemble d'étapes (S2) étant répété avec la matrice de pixels (M) de la ou des images (I) redressée à la deuxième étape (E24) de redressement.

10. Procédé selon l'une des revendications 1 à 9,
**caractérisé en ce qu'**il comprend en outre une troisième étape (E3) de détermination, mise en oeuvre par une troisième unité de détermination (6), pour déterminer une position d'au moins un seuil de la ou des pistes d'atterrissage (T) à partir de la position du ou des éléments de marquage au sol (100) détectés dans la ou les images (I) et de caractéristiques de la ou des pistes d'atterrissage (T) provenant d'une base de données (41) de piste.

11. Procédé selon l'une des revendications 1 à 10,
**caractérisé en ce qu'**il comprend en outre une quatrième étape (E4) de détermination, mise en oeuvre par une quatrième unité de détermination (7), pour déterminer une position de l'aéronef (AC) à partir de la position du ou des seuils de la ou des pistes d'atterrissage (T) dans l'image (I), d'une position et angles de la ou des unités de collecte d'image (10) et des caractéristiques de la ou des pistes d'atterrissage (T) provenant de la base de données (41) de piste.

12. Procédé selon l'une des revendications 1 à 11,
**caractérisé en ce qu'**il comprend une étape de transmission (E5), mise en oeuvre par une unité de transmission (8), pour transmettre à un dispositif utilisateur (9) un signal représentatif de la position d'au moins un seuil de la ou des pistes d'atterrissage (T) ou de la position de l'aéronef (AC), ou de la position du ou des éléments de marquage au sol (100) d'au moins une piste d'atterrissage (T) dans la ou les images (I).

13. Système de détection d'au moins un élément de marquage au sol d'au moins une piste d'atterrissage,
**caractérisé en ce qu'**il comprend au moins :
- Une unité de collecte d'images (10) configurée pour collecter au moins une image (I) captée par au moins une unité de capture d'images (1), la ou les images (I) étant sous forme d'une matrice de pixels (M) présentant une première dimension (D1) et une deuxième dimension (D2),
- un premier ensemble d'unités (U1) comprenant :
∘ une première unité de découpage (11) configurée pour découper la matrice de pixels (M) en premières bandes (ST1) parallèles associées chacune à une position respective de chaque première bande (ST1) dans la matrice de pixels (M) de la ou des images (I), chaque premières bande (ST1) correspondant à une première sous-matrice (SM1) présentant au moins une ligne de pixels (L1, L2) et un nombre de colonnes de pixels (C1, C2, ..., C10) égal à la première dimension (D1) de la matrice de pixels (M),
∘ une première unité de détermination (12) configurée pour déterminer une courbe d'intensité moyenne (C) pour au moins une première bande (ST1) sélectionnée parmi les premières bandes (ST1) provenant du découpage de la matrice de pixels (M), la courbe d'intensité moyenne (C) étant déterminée en calculant pour chaque colonne de pixels (C1, C2, ..., C10) de la première sous-matrice (SM1) de la ou des premières bandes (ST1) sélectionnées une moyenne d'intensité du ou des pixels de chaque colonne de pixels (C1, C2, ..., C10),
∘ une première unité de reconnaissance (13) configurée pour reconnaître dans la courbe d'intensité moyenne (C) de la ou des premières bandes (ST1) sélectionnées une forme de courbe caractéristique d'au moins un élément de marquage au sol (100) d'au moins une la piste d'atterrissage (T),
le système de détection (S) comprenant en outre :
- une unité de détection (2) configurée pour détecter une position du ou des éléments de marquage au sol (100) dans la ou les images (I) à partir du ou des éléments de marquage au sol (100) reconnus et de la position de la ou des premières bandes (ST1) sélectionnées dans la matrice de pixels (M) de la ou des images (I).

14. Système selon la revendication 13,
**caractérisée en ce qu'**il comprend un deuxième ensemble d'unités (U2) comprenant :
- une deuxième unité de découpage (21) configurée pour découper la matrice de pixels (M) en deuxièmes bandes (ST2) parallèles associées chacune à une position respective de chaque deuxième bande (ST2) dans la matrice de pixels (M) de la ou des images (I), chaque deuxième bande (ST2) correspondant à une deuxième sous-matrice présentant au moins une ligne de pixels (L1, L2) et un nombre de colonnes de pixels (C1, C2, ..., C10) égal à la deuxième dimension (D2) de la matrice de pixels (M),
- une deuxième unité de détermination (22) configurée pour déterminer une courbe d'intensité moyenne (C) pour au moins une deuxième bande (ST2) sélectionnée parmi les deuxièmes bandes (ST2) provenant du découpage de la matrice de pixels (M), la courbe d'intensité moyenne (C) étant déterminée en calculant pour chaque colonne de pixels (C1, C2, ..., C10) de la deuxième sous-matrice de la ou des deuxièmes bandes (ST2) sélectionnées une moyenne d'intensité du ou des pixels de chaque colonne de pixels (C1, C2, ..., C10),
- une deuxième unité de reconnaissance (23) configurée pour reconnaître dans la courbe d'intensité moyenne (C) de la ou des deuxièmes bandes (ST2) sélectionnées une forme de courbe caractéristique d'au moins un élément de marquage au sol (100) de la piste d'atterrissage (T),
l'unité de détection (2) étant configurée pour détecter une position du ou des éléments de marquage au sol (100) d'au moins une piste d'atterrissage (T) dans la ou les images (I) à partir du ou des éléments de marquage au sol (100) reconnus, de la position de la ou des premières bandes (ST1) sélectionnées dans la matrice de pixels (M) de la ou des images (I) et de la position de la ou des deuxièmes bandes (ST2) sélectionnées dans la matrice de pixels (M) de la ou des images (I).

15. Aéronef,
**caractérisé en ce qu'**il comporte un système de détection (S), tel que celui spécifié sous l'une quelconque des revendications 13 et 14.
